# EUROPÄISCHE PATENTANMELDUNG

(11) **EP 4 613 552 A1**
(43) Veröffentlichungstag der Anmeldung: **10.09.2025**
(21) Anmeldenummer: 24219874.5
(22) Anmeldetag: 13.12.2024
(51) Int. Cl.: B60P 1/02, B60P 1/43, B60P 3/07

(54) **ANHÄNGER MIT EINER AUFFAHRRAMPE**

(30) Priorität: 07.03.2024 DE 102024106616
(71) Anmelder: Münz Fahrzeugbau GmbH & Co. KG, 72124 Pliezhausen (DE)
(72) Erfinder: Bayha, Steffen, 72124 Pliezhausen (DE)
(74) Vertreter: Kohler Schmid Möbus Patentanwälte

(57) **Zusammenfassung**

Die Erfindung betrifft einen Anhänger (10, 10a 10', 10", 10‴, 10"", 10‴") mit einem ersten Rahmen (12), der um eine im Bereich einer Radachse (22, 24) angeordnete Absenkachse (14) schwenkbar ist, sodass der Anhänger (10, 10a 10', 10", 10‴, 10"", 10‴") heckseitig absenkbar ist, wobei eine heckseitige, insbesondere sich über die gesamte Breite des Anhängers (10, 10a 10', 10", 10‴, 10"", 10‴") erstreckende Rampe (60, 100), die um eine erste horizontale Schwenkachse (58) schwenkbar ist, ein Beladungssensor (78, 79) und/oder zumindest ein Reifendrucksensor (80) vorgesehen sind.

## Beschreibung

Die Erfindung betrifft einen Anhänger mit einem ersten Rahmen, der um eine im Bereich einer Radachse angeordnete Absenkachse schwenkbar ist, sodass der Anhänger heckseitig absenkbar ist.

Es sind Anhänger bekannt, die heckseitig abgesenkt werden können, damit beispielsweise eine zu transportierende Baumaschine auf den Anhänger aufgefahren werden kann. Hierbei werden häufig separat zu transportierende Rampen an den Anhänger angelegt, um das Auffahren mit der Baumaschine zu erleichtern.

Das separate Anlegen und Transportieren von Auffahrrampen ist umständlich.

Aufgabe der vorliegenden Erfindung ist es daher, einen Anhänger bereitzustellen, der einfach mit schweren Baumaschinen befahren und sicher betrieben werden kann.

Gelöst wird diese Aufgabe erfindungsgemäß durch einen Anhänger mit einem ersten Rahmen, der um eine im Bereich einer Radachse angeordnete Absenkachse schwenkbar ist, sodass der Anhänger heckseitig absenkbar ist, wobei eine heckseitige, insbesondere sich über die gesamte Breite des Anhängers erstreckende Rampe, vorgesehen ist, die um eine erste horizontale Schwenkachse schwenkbar ist, wobei ein Beladungssensor und/oder zumindest ein Reifendrucksensor vorgesehen sind. Die Rampe stellt eine hintere Bordwand dar und muss nicht separat transportiert und angelegt werden. Durch den Beladungssensor kann beispielsweise detektiert werden mit welcher Last bzw. wie stark der Anhänger beladen ist. In Abhängigkeit von dem Sensorsignal können Bremskräfte eingestellt werden. Dadurch wird die Sicherheit des Anhängers erhöht. Auch über einen Reifendrucksensor kann erfasst werden, wie stark der Anhänger beladen ist. Außerdem kann über einen Reifendrucksensor erfasst werden, wenn in einem Reifen ein Druckverlust vorliegt. Auch dadurch wird die Sicherheit des Anhängers erhöht.

Vorteile ergeben sich, wenn die Rampe einen Verlängerungsabschnitt aufweist, der über zwei parallele Arme mit der Rampe verbunden ist, wobei die Arme jeweils schwenkbar mit der Rampe und dem Verlängerungsabschnitt verbunden sind. Dadurch ist es möglich, den Verlängerungsabschnitt parallel zur Rampe zu verlagern. Ein Verschwenken des Verlängerungsabschnitts relativ zur Rampe kann dadurch verhindert werden.

Die Drehpunkte der Arme können an der Rampenunterseite angeordnet sein. Dadurch ergibt sich eine ebene Auffahrfläche, wenn der Verlängerungsabschnitt ausgefahren ist. Insbesondere behindern die Drehpunkte bzw. Drehachsen nicht das Auffahren auf den Anhänger.

Die Bedienfreundlichkeit wird erhöht, wenn ein die Relativbewegung von Rampe und Verlängerungsabschnitt unterstützendes Federelement, insbesondere ein Gasfederelement, vorgesehen ist. Ein solches Federelement kann somit das Einfahren als auch das Ausfahren des Verlängerungsabschnitts unterstützen.

Ebenso kann eine das An- und/oder Abklappen der Rampe unterstützende Entlastungshilfe vorgesehen sein. Die Entlastungshilfe kann als Feder oder Zylinder ausgeführt sein.

An der Rampe und/oder am Verlängerungsabschnitt können Bodenauflageelemente vorgesehen sein. Dadurch kann beispielsweise verhindert werden, dass Drehpunkte der Arme an der Rückseite der Rampe mit dem Boden in Berührung kommen. Somit werden diese Drehpunkte geschützt.

Die Rampe kann endseitig stufenförmig ausgebildet sein, sodass ein Abschnitt des Verlängerungsabschnitts aufgenommen werden kann. Somit kann eine stufenlose Auffahrfläche realisiert werden.

Die Rampe kann einen Rahmen aufweisen, der um die erste horizontale Schwenkachse verschwenkbar ist. Durch den Rahmen wird die Rampe ausgesteift, sodass diese auch von schweren Maschinen ohne Beschädigungen befahrbar ist. Der Rahmen kann dabei abschnittsweise als Hohlprofil ausgebildet sein. Weiterhin kann der Rahmen abschnittsweise rohrartig ausgebildet sein. Ein solcher Rahmen ist besonders stabil.

Durch den Verlängerungsabschnitt kann die Rampe verlängert werden. Dadurch ist es möglich, die Rampe in einem flachen Winkel gegenüber dem Boden anzuordnen, was das Auffahren mit einer Baumaschine erleichtert. Dadurch, dass die Rampe einen Verlängerungsabschnitt aufweist, der über die Arme ausgefahren werden kann, muss der Verlängerungsabschnitt nicht extra manuell an der Rampe befestigt werden, wenn eine verlängerte Rampe benötigt wird. Der Verlängerungsabschnitt kann manuell, pneumatisch, federunterstützt und/oder hydraulisch unterstützt bewegbar sein. Wenn die Rampe zweigeteilt ist und beispielsweise zwei Türen aufweist, können auch zwei Verlängerungsabschnitte vorgesehen sein. Insbesondere kann an jeder Tür bzw. an jedem Rampenabschnitt ein Verlängerungsabschnitt vorgesehen sein. Wenn die Rampe einteilig ist bzw. nur insgesamt um eine vertikale Achse verschwenkbar ist, kann nur ein Verlängerungsabschnitt vorgesehen sein.

Eine besonders stabile Ausgestaltung des Rahmens ergibt sich, wenn dieser einen horizontalen und zwei dazu senkrechte Rahmenabschnitte aufweist. Besonders Vorteile ergeben sich, wenn der horizontale Rahmenabschnitt die erste horizontale Schwenkachse darstellt.

Zumindest ein Rampenabschnitt kann um eine zur horizontalen Schwenkachse senkrechte Schwenkachse schwenkbar sein. Beispielsweise kann die gesamte Rampe um die senkrechte Achse schwenkbar sein.

Vorteile ergeben sich jedoch, wenn zwei um eine zur horizontalen Achse senkrechte Schwenkachse schwenkbare Rampenabschnitte vorgesehen sind. Dabei kann jeder der schwenkbaren Rampenabschnitte an einem zum horizontalen Rahmenabschnitt senkrechten Rahmenabschnitt schwenkbar gelagert sein.

Die schwenkbaren Rampenabschnitte können durch eine Verriegelung miteinander verriegelbar sein. Dadurch wird eine stärkere Stabilität der Rampe erreicht, wenn diese als Auffahrrampe benutzt werden soll. Weiterhin können die schwenkbaren Rampenabschnitte mit dem horizontalen Rahmenabschnitt verriegelt sein, wodurch sich eine noch größere Steifigkeit der Rampe ergibt.

Wenn die Rampenabschnitte unabhängig voneinander um die erste horizontale Schwenkachse schwenkbar sind, kann ein Ausgleich von Unebenheiten eines Bodens erfolgen. Durch diese Maßnahme kann sichergestellt werden, dass die Rampe mit ihrem freien Ende möglichst gut am Boden aufliegt, ohne aufgrund eines unebenen Bodens verformt zu werden.

Die Rampe kann zumindest abschnittsweise als Gitterrost ausgebildet sein. Durch diese Maßnahme kann der Windwiderstand des Anhängers reduziert werden. Außerdem kann Schmutz durch den Gitterrost fallen, wenn z. B. eine Raupe auf den Anhänger auffährt.

Weitere Vorteile ergeben sich, wenn die Rampe einen reibungserhöhenden Belag aufweist. Beispielsweise kann die Rampe einen Gummibelag aufweisen. Alternativ können Quereisen auf der Rampe vorgesehen sein.

Die Rampe kann um eine zweite horizontale Schwenkachse pendelbar sein. Wenn auf den Anhänger beispielsweise Schüttgut aufgeladen ist, welches durch ein Abkippen der Ladefläche bzw. Pritsche nach hinten abgeladen werden soll, ist es vorteilhaft, wenn die Rampe um eine zweite, von der ersten horizontalen Achse beabstandet Achse pendelbar ist. Dabei kann der gesamte Rahmen der Rampe pendelbar sein.

Wenn der Anhänger dafür vorgesehen ist, einen Bagger zu transportieren, ist es vorteilhaft, wenn die Rampe eine Ausnehmung, insbesondere eine zentrale Ausnehmung, für einen Baggerarm aufweist. Somit kann verhindert werden, dass der Baggerarm gegen die Rampe schlägt. Die Ausnehmung kann in dem oder den Verlängerungsabschnitten ausgebildet sein.

Der Anhänger kann einen ersten Rahmen aufweisen, der um eine im Bereich einer Radachse angeordnete Absenkachse schwenkbar ist, sodass der Anhänger heckseitig absenkbar ist. Insbesondere in Verbindung mit einer heckseitig angebrachten Rampe lässt sich der heckseitig abgesenkte Anhänger besonders einfach beladen, insbesondere befahren.

An dem Anhänger kann heckseitig ein Unterfahrschutz angeordnet sein.

Dadurch kann verhindert werden, dass andere Verkehrsteilnehmer unter den Anhänger fahren bzw. im Falle eines Unfalls ein anderes Fahrzeug unter den Anhänger geschoben wird. Dadurch wird die Sicherheit des Anhängers erheblich verbessert.

Der Unterfahrschutz kann an dem ersten Rahmen oder einer Pritsche angeordnet sein. Vorteile hinsichtlich der Stabilität bestehen bei einer Anordnung am ersten Rahmen. Wird der Unterfahrschutz an der Pritsche angeordnet, sollte diese zumindest im Fahrbetrieb zuverlässig mit dem ersten Rahmen verriegelt sein.

Der Unterfahrschutz kann unter dem ersten Rahmen angeordnet sein. Insbesondere kann er vom ersten Rahmen nach unten abstehen.

Gemäß einer Ausgestaltung der Erfindung kann vorgesehen sein, dass
a) an dem ersten Rahmen ein Fahrgestell angeordnet ist und eine Zugdeichsel vorgesehen ist, die an einer Stelle zwischen einer Vorderkante des ersten Rahmens und einem Rad des Anhängers relativ zum ersten Rahmen schwenkbar angeordnet ist oder dass
b) ein Fahrgestellrahmen vorgesehen ist und der erste Rahmen relativ zum Fahrgestellrahmen um die Absenkachse schwenkbar ist.

Der heckseitige Unterfahrschutz kann somit an unterschiedlich ausgestalteten Anhängern vorgesehen sein, die um eine Absenkachse im Bereich der Radachsen absenkbar sind. Insbesondere kann der Unterfahrschutz bei Anhängern unterschiedlicher Gewichtsklassen zum Einsatz kommen.

Die Absenkung kann durch ein Stellglied zwischen der Zugdeichsel und dem ersten Rahmen erfolgen. Dieses Stellglied kann als doppeltwirkender Zylinder oder einfachwirkender Zylinder ausgeführt sein. Der Zylinder kann pneumatisch, hydraulisch oder elektrisch betrieben sein. Die Ansteuerung kann durch ein Wege-Ventil, welches eine Sperrstellung aufweisen kann, oder über eine Steuerplatine erfolgen.

Eine besonders einfache Ausgestaltung des Unterfahrschutzes ergibt sich, wenn dieser hohlprofilförmig, insbesondere rohrförmig, oder als gekantetes Blechprofil ausgebildet ist. Ein derartig ausgebildeter Unterfahrschutz ist besonders stabil. Wenn der Unterfahrschutz rohrförmig ausgebildet ist, kann er über entsprechende Rohrschellen und damit verbundene Arme am ersten Fahrgestellrahmen befestigt werden. Ein gekantetes Blechprofil kann beispielsweise an den ersten Rahmen angeschraubt oder angeschweißt werden.

Der Unterfahrschutz kann in einer Absenkstellung relativ zum ersten Rahmen bewegbar sein und in einer Fahrstellung arretierbar sein. Wenn der Unterfahrschutz nicht bewegbar ist, kann je nach Anordnung des Unterfahrschutzes die Situation eintreten, dass der Anhänger beim heckseitigen Absenken mit dem Unterfahrschutz in Bodenberührung kommt und so ein weiteres Absenken verhindert wird. Wenn jedoch der Unterfahrschutz entriegelt werden kann und dann relativ zum ersten Rahmen bewegbar ist, kann der Unterfahrschutz so bewegt werden, dass er ein Absenken des Anhängers nicht verhindert oder beeinträchtigt.

Insbesondere kann der Unterfahrschutz relativ zum ersten Rahmen schwenkbar sein. Beispielsweise kann der Unterfahrschutz nach seiner Entriegelung bei Berührung mit dem Boden automatisch wegschwenken. Das Entriegeln kann automatisch erfolgen. Der Unterfahrschutz kann beispielsweise durch einen Zylinder weggeschwenkt werden. Dieser Zylinder kann hydraulisch, pneumatisch oder mit einem anderen Medium angesteuert werden. Die Ansteuerung kann über ein Wege-Ventil stattfinden. Die Signale für die Ansteuerung des Wege-Ventils können von einem Modulator stammen. Der Modulator kann über eine Software extern mit verschiedenen Parametern programmiert werden, z. B. so, dass der Anhänger bei Überschreitung einer gewissen Geschwindigkeit, beispielsweise von 5, 10 oder 15 km/h, den Unterfahrschutz ausklappt. Diese Parameter können am Zug-Fahrzeug durch Sensoren und Schalter ermittelt werden.

Alternativ oder zusätzlich ist es denkbar, dass der Unterfahrschutz linear relativ zum ersten Rahmen verschiebbar ist. Beispielsweise kann eine Linearführung vorgesehen sein, entlang der sich der Unterfahrschutz bewegen kann. Alternativ kann eine Teleskopführung vorgesehen sein. Weiterhin kann vorgesehen ein, dass der Unterfahrschutz zwischen zwei Endstellungen bewegbar ist und in diesen Stellungen jeweils arretierbar ist. So kann der Unterfahrschutz in einer Absenkstellung und in einer Fahrstellung arretiert werden, beispielsweise mittels eines (Schnapp-)Bolzens, der mit unterschiedlich positionierten Ausnehmungen an der Halterung des Unterfahrschutzes zusammenwirkt.

Besondere Vorteile ergeben sich, wenn die Schwenkachse des Unterfahrschutzes zu einer Mittellängsachse des Unterfahrschutzes, insbesondere horizontal, versetzt ist. Durch diese versetzte Anordnung der Achsen kann sichergestellt werden, dass der Unterfahrschutz bei Berührung mit dem Boden (automatisch) verschwenkt und die Schwenkbewegung nicht blockiert ist.

Die Sicherheit des Anhängers wird weiterhin dadurch erhöht, dass ein Beleuchtungsträger am ersten Rahmen angeordnet sein kann. Dabei kann der Beleuchtungsträger gegenüber dem heckseitigen Ende des ersten Rahmens in Richtung Radachse versetzt sein, aber so angeordnet sein, dass ein Einstrahlwinkel (von der Beleuchtungsanlage) im Bereich von 45° gegeben ist. Somit ist der Beleuchtungsträger zum einen geschützt angeordnet aber zum anderen so angeordnet, dass das heckseitige Ende des Anhängers von anderen Verkehrsteilnehmern auch bei schlechten Sicht- und Lichtverhältnissen wahrgenommen werden kann.

Der Unterfahrschutz kann in den Beleuchtungsträger integriert sein. Durch diese Maßnahme wird auch noch zusätzlich der Beleuchtungsträger vor Beschädigungen geschützt. Alternativ kann der Unterfahrschutz zwischen dem Beleuchtungsträger und einer Radachse angeordnet sein. Der Unterfahrschutz kann demnach gegenüber dem Beleuchtungsträger in Richtung Zugfahrzeug versetzt sein.

Der Beleuchtungsträger, der Unterfahrschutz und/oder das Fahrzeugheck können so ausgeführt sein, dass sie als Heckabstützung beim Verladen von Maschinen bzw. bei der Absenkfunktion dienen.

Wenn das Fahrgestell des Anhängers als Luftfederaggregat, Pendelachs-Aggregat, Bogie-Aggregat oder Parabelfeder-Aggregat ausgebildet ist oder die Radachsen über Stelleelemente mit dem ersten Rahmen verbunden sind, kann die Absenkfunktion des Anhängers besonders einfach realisiert werden.

Der Anhänger kann eine Zwillingsbereifung aufweisen. Wenn Räder mit geringem Raddurchmesser, beispielsweise < 750 mm Raddurchmesser, verwendet werden, ergibt sich ein flacher Auffahrwinkel, wenn der Anhänger heckseitig abgesenkt ist.

Der erste Rahmen kann eine Höhe von mindestens 100 mm aufweisen. Dadurch ergibt sich eine erhöhte Stabilität des ersten Rahmens.

Der Anhänger kann eine Pritsche aufweisen. Die Pritsche kann als Dreiseiten-Kipperpritsche ausgeführt sein. In diesem Fall können beispielsweise Schüttgüter von der Ladefläche des Anhängers wahlweise über eine von zwei Längsseiten oder über die Rückseite entladen werden. Dazu können lösbare Drehgelenke, insbesondere verbolzte Kipplager, vorgesehen sein mit der die Ladefläche an einer der beiden Längsseiten oder an der Rückseite des Anhängers mit dem ersten Rahmen drehbar verbunden wird. Ferner kann ein Stellglied, beispielsweise ein hydraulisch, pneumatisch oder elektrisch betriebener Arbeitszylinder in einem mittleren Bereich des Anhängers vorgesehen sein, durch das die Ladefläche gekippt werden kann. Wenn eine Ladefläche des Anhängers um wenigstens zwei verschiedene quer zur Längsachse des Anhängers verlaufende Achsen schwenkbar ist, ermöglicht dies zusätzlich zum Absenken des hinteren Endes des Anhängers, um beispielsweise den Anhänger mit einem Fahrzeug be- oder entladen zu können, ein Abkippen zum Zweck des Entladens von beispielsweise Schüttgütern.

Die Ladefläche kann Anbinderinge aufweisen, um Ladung, insbesondere Maschinen, sichern zu können.

An der Pritsche kann die um eine erste horizontale Schwenkachse schwenkbare Rampe befestigt sein. Die Befestigung kann über eine Zentralverriegelung ausgeführt sein (lösbare Befestigung). Die Rampe kann dabei als Auffahrrampe für die Pritsche dienen. Es ist vorteilhaft, wenn bei abgesenktem Anhänger die Rampe und die Ladefläche vollständig eben sind, um Maschinen mit einer geringen Bodenfreiheit zu transportieren.

Der Beladungssensor kann signaltechnisch mit einem Modulator verbunden sein. Dabei kann der Modulator eingerichtet sein, einen Bremsdruck in Abhängigkeit des Sensorsignals des Beladungssensors einzustellen und einen Bremszylinder entsprechend anzusteuern. Der Beladungssensor kann als Wegesensor oder Drucksensor ausgeführt sein. Alternativ kann der Beladungssensor als lastabhängiges Bremsventil ausgeführt sein, welches geeignete Bremsdrücke an die Bremszylinder weitergeben kann.

Der Modulator kann so programmiert werden, dass der Anhänger bei Absenkarbeiten die Betriebsbremse an einer Radachse bzw. an beiden Radachsen löst und somit keine Verspannungen am Achsaggregat auftreten. Verspannungen und Verschränkungen der Radachsen würden auftreten, wenn während der Beladung die Radbremsen aktiviert würden. Dies ist unerwünscht, da sich zusätzlicher Verschleiß als auch eine reduzierte Betriebssicherheit ergeben können.

Um den Fahrzeugführer eines Zugfahrzeugs zuverlässig über den Zustand des Anhängers zu informieren, kann vorgesehen sein, dass der Reifendrucksensor und/oder der Beladungssensor signaltechnisch mit einem Zugfahrzeug, insbesondere über eine Empfängerplatine, verbindbar ist. Somit kann ein Fahrzeugführer unmittelbar erkennen, wenn der Anhänger in einen unsicheren Zustand gelangt, beispielsweise, weil einer der Reifen Reifendruck verliert. Die Empfängerplatine kann dabei in dem Modulator angeordnet sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine Seitenansicht eines ersten Anhängers im teilweise abgesenkten Zustand;
- Fig. 2: eine Seitenansicht einer alternativen Ausgestaltung eines Anhängers im teilweise abgesenkten Zustand;
- Fig. 3: eine weitere Ausgestaltung eines Anhängers im nicht abgesenkten Zustand;
- Fig. 4: den Anhänger der Figur 3 mit eingefahrenem Unterfahrschutz;
- Fig. 5: den Anhänger der Figur 3 mit ausgefahrenem Unterfahrschutz;
- Fig. 6: den Anhänger der Figur 3 in abgesenkten Zustand;
- Fig. 7: den Anhänger der Figur 6 mit abgeklappter Rampe;
- Fig. 8: eine weitere Ausführungsform eines Anhängers;
- Fig. 9: eine alternative Ausgestaltung eines Anhängers;
- Fig. 10a: eine schematische Darstellung eines Schaltplans eines Anhängers mit Luftbalgen;
- Fig. 10b: eine schematische Darstellung eines Schaltplans eines Anhängers ohne Luftbalg;
- Fig. 10c: eine schematische Darstellung eines Schaltplans eines Anhängers mit Wegesensor;
- Fig. 11: ein Teil eines Anhängers zur Verdeutlichung eines Beladungssensors;
- Fig. 12: eine Seitenansicht eines abgesenkten Anhängers mit einer Rampe mit Verlängerungsabschnitt;
- Fig. 13: eine vergrößerte Darstellung der Rampe mit Verlängerungsabschnitt;
- Fig. 14: eine Darstellung zur Erläuterung der Schwenkbarkeit von Rampenteilen um vertikale Schwenkachsen;
- Fig. 15: eine Rückansicht einer Rampe;
- Fig. 16: eine Darstellung zur Erläuterung der Pendelbarkeit der Rampe;
- Fig. 17: eine weitere Darstellung einer Rampe;
- Fig. 18: eine Rampe, einen Beleuchtungsträger und einen Unterfahrschutz;
- Fig. 19: eine Seitenansicht eines Anhängers mit verschwenkter Pritsche;
- Fig. 20: eine Heckansicht des Anhängers der Fig. 19 in einer Seitkippstellung.

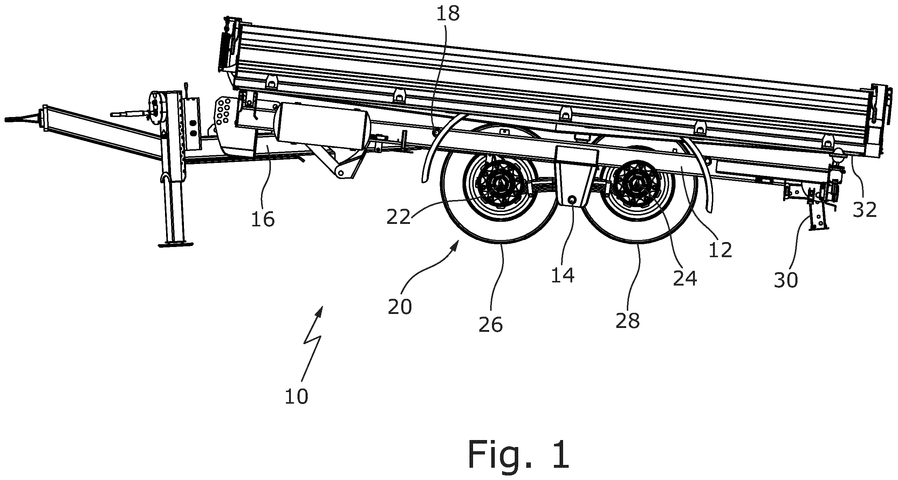

Die Figur 1 zeigt eine Seitenansicht eines Anhängers 10, der einen ersten Rahmen 12 aufweist. Der erste Rahmen 12 ist um eine Absenkachse 14 verschwenkbar und somit heckseitig absenkbar. Weiterhin ist eine Zugdeichsel 16 vorgesehen, die um eine Schwenkachse 18 relativ zum ersten Rahmen 12 verschwenkbar ist, um dadurch das Absenken zu ermöglichen.

Der erste Rahmen 12 ist mit einem Fahrgestell 20 im Bereich der Absenkachse 14 verbunden. Das Fahrgestell 20 umfasst zwei Radachsen 22, 24 mit entsprechenden Rädern 26, 28. Die Absenkachse 14 ist zwischen den Rädern 26, 28 bzw. Radachsen 22, 24 angeordnet. Das Fahrgestell 20 umfasst insbesondere sogenannte Bogie-Achsen bzw. ein Bogie-Aggregat. Das Fahrgestell 20 wird auch als Doppelachsaggregat, Pendelaggregat oder Tandemachse bezeichnet.

Heckseitig weist der erste Rahmen 12 einen Unterfahrschutz 30 auf. In der gezeigten Stellung kann der Unterfahrschutz 30 arretiert werden. Beim Lösen einer Arretierung kann der Unterfahrschutz 30 relativ zum ersten Rahmen 12 verschwenkt werden, sodass der erste Rahmen 12 heckseitig dem Boden weiter angenähert werden kann.

Im gezeigten Ausführungsbeispiel weist der Anhänger 10 eine Pritsche 32 auf, die bezüglich des ersten Rahmens 12 verschwenkbar ist. Denkbar ist, dass die Pritsche 32 um eine Achse quer zur Längsachse das Anhängers 10 und/oder um zumindest eine Achse parallel zur Längsachse des Anhängers 10 relativ zum ersten Rahmen 12 verschwenkt werden kann. Insbesondere kann der Anhänger 10 als Dreiseitenkipper ausgebildet sein.

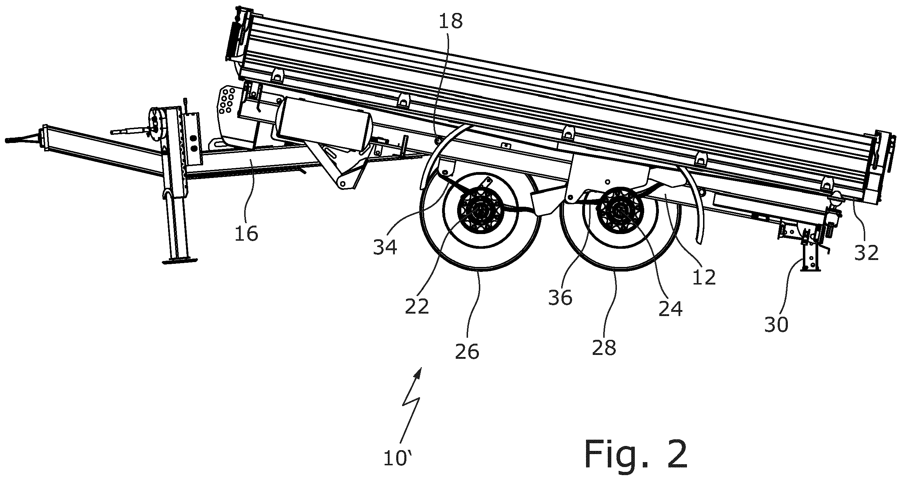

Die Figur 2 zeigt eine alternative Ausgestaltung eines Anhängers 10'. Der Unterschied zum Anhänger 10 liegt im Wesentlichen in der Ausgestaltung des Fahrgestells. Hier sind die Räder 26, 28 bzw. Radachsen 22, 24 über Schwingen 34, 36 mit dem ersten Rahmen 12 verbunden. Auch hier ist der erste Rahmen 12 bzgl. einer Absenkachse, die sich zwischen den Rädern 26, 28 bzw. Radachsen 22, 24 befindet, verschwenkbar und somit heckseitig absenkbar. Um das Absenken zu ermöglichen, ist die Zugdeichsel 16 wiederum um die Schwenkachse 18 mit dem ersten Rahmen 12 verbunden. Auch der Anhänger 10' weist einen Unterfahrschutz 30 auf.

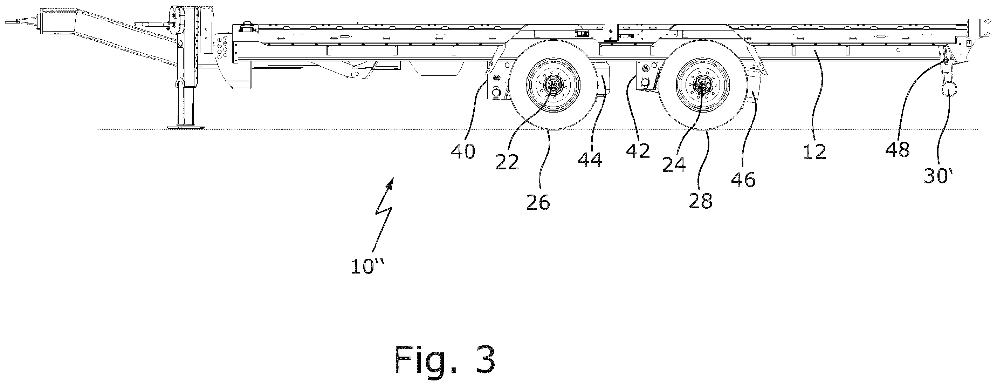

Die Figur 3 zeigt eine weitere alternative Ausgestaltung eines Anhängers 10". In diesem Fall sind an dem ersten Rahmen 12 Lagerböcke 40, 42 angeordnet, an denen die Radachsen 22, 24 mit den entsprechenden Rädern 26, 28 über entsprechende Ausleger schwenkbar angeordnet sind. Als Luftbalg ausgebildete Stellelemente 44, 46 können ein Verschwenken des ersten Rahmens 12, insbesondere ein heckseitiges Absenken, bewirken.

Ein Unterfahrschutz 30' ist hohlprofilförmig, insbesondere rohrförmig, ausgebildet und über eine Linearführung 48 relativ zum ersten Rahmen 12 verstellbar. Insbesondere kann der Unterfahrschutz 30' entlang der Linearführung 48 eingefahren werden, sodass der erste Rahmen 12 heckseitig in Bodennähe abgesenkt werden kann. In der abgesenkten Stellung kann der Anhänger 10" einfach mit einer Baumaschine (über eine nicht dargestellte Rampe) befahren werden.

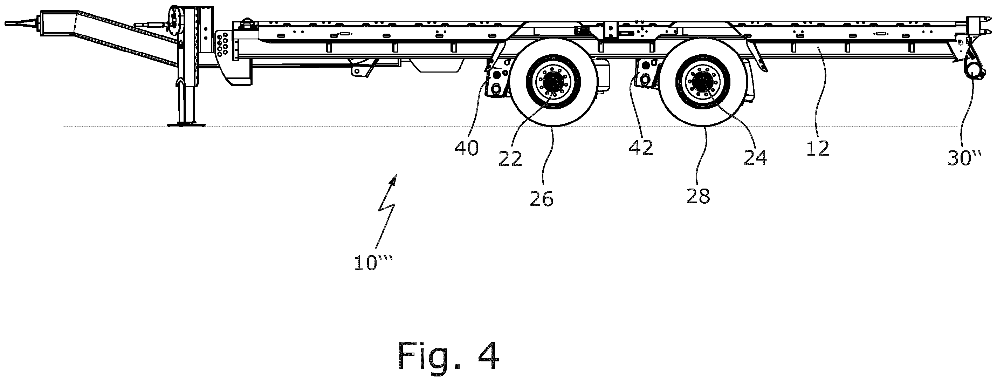

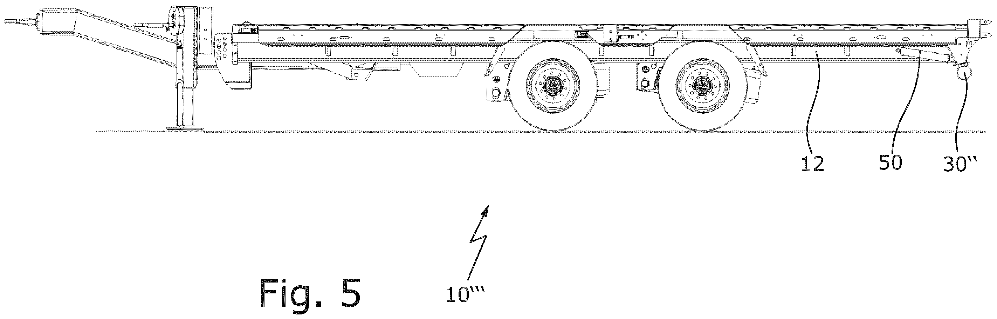

Der Anhänger 10‴ der Figur 4 entspricht im Wesentlichen dem Anhänger 10" der Figur 3. Der Unterschied liegt darin, dass der Unterfahrschutz 30" schwenkbar hinten am ersten Rahmen 12 angeordnet ist. Um den Anhänger 10‴ heckseitig absenken zu können, kann der Unterfahrschutz 30" eingefahren werden, wie dies in der Figur 5 angedeutet ist. Dies kann über ein Stellelement 50 erfolgen.

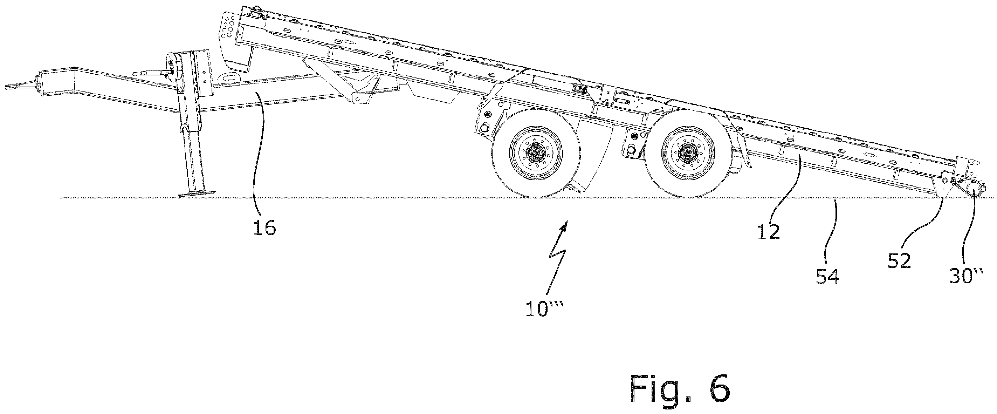

In der Figur 6 wurde der Unterfahrschutz 30" vollständig verschwenkt und der Anhänger 10‴ heckseitig abgesenkt. Insbesondere ist zu erkennen, dass der Unterfahrschutz 30" so weit verschwenkt wurde, dass der erste Rahmen 12 mit einem Bodenauflageelement 52 den Boden 54 berühren und sich an diesem abstützen kann. Die Zugdeichsel 16 wurde gegenüber dem ersten Rahmen 12 verschwenkt, sodass die in der Figur 6 gezeigte Stellung eingenommen werden kann.

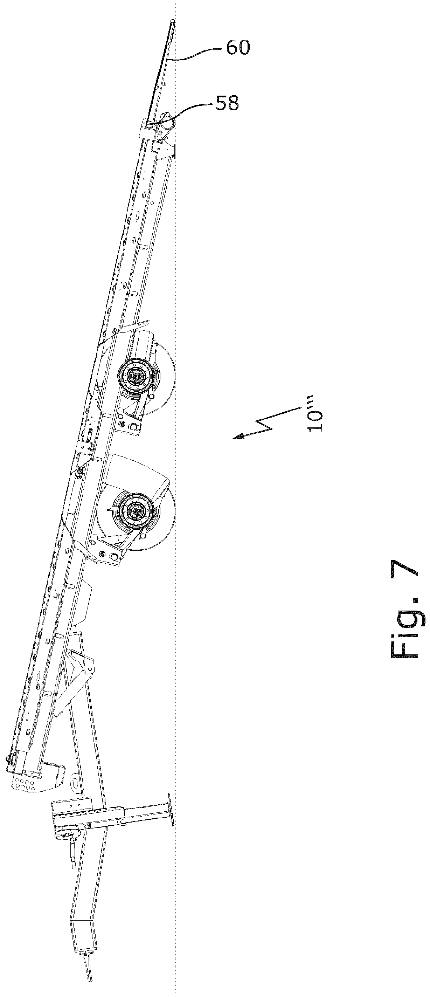

Die Figur 7 entspricht im Wesentlichen der Figur 6, wobei hier gezeigt ist, dass der Anhänger 10‴ eine um eine erste horizontale Schwenkachse 58 schwenkbare Rampe 60 aufweisen kann, über die der Anhänger 10‴ in seiner abgesenkten Stellung befahren werden kann.

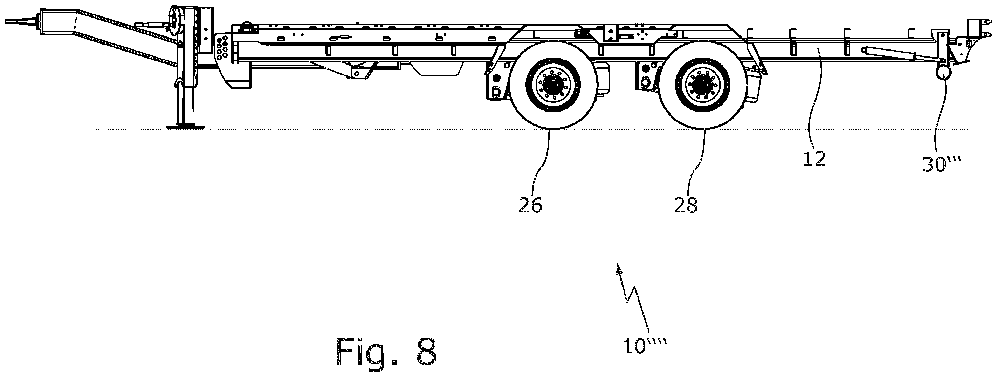

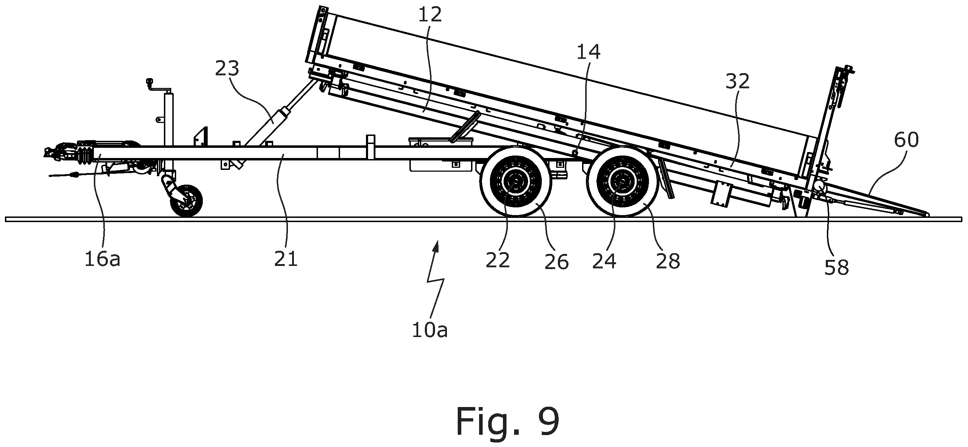

Die Figur 8 zeigt eine Seitenansicht eines Anhängers 10"". Hier ist zu erkennen, dass der verschwenkbare Unterfahrschutz 30‴ in Richtung der Räder 26, 28 bzgl. des heckseitigen Endes des ersten Rahmens 12 versetzt sein kann. Die Figur 9 zeigt einen Anhänger 10a mit einem Fahrgestellrahmen 21, an dem eine starre Zugdeichsel 16a angeordnet ist. Der Anhänger 10a weist zwei Radachsen 22, 24 auf, an denen Räder 26, 28 angeordnet sind. An dem Fahrgestellrahmen 21 ist ein erster Rahmen 12 angeordnet. Dieser ist um eine Absenkachse 14, die zwischen den Radachsen 22, 24 angeordnet ist, relativ zum Fahrgestellrahmen 21 schwenkbar. Eine Pritsche 32 ist relativ zum ersten Rahmen 12 schwenkbar und zwar sowohl um eine Achse, die parallel zu den Radachsen 22, 24 verläuft, als auch um Achsen, die parallel zur Längsrichtung des Anhängers 10a verlaufen.

Die Verschwenkung der Pritsche 32 relativ zum Fahrgestellrahmen 21 wird durch einen Zylinder 23 bewirkt, der zwischen dem Fahrgestellrahmen 21 und dem ersten Rahmen 12 angeordnet ist bzw. wirkt. Der Zylinder 23 ist als doppeltwirkender Hydraulikzylinder ausgebildet.

Weiterhin ist zu erkennen, dass eine Rampe 60 um eine erste horizontale Schwenkachse 58 abgeklappt wurde, sodass eine mit der Ladefläche des Anhängers 10a ebene Fläche entsteht. Dadurch kann beispielsweise eine Baumaschine einfach auf den Anhänger 10a aufgefahren werden.

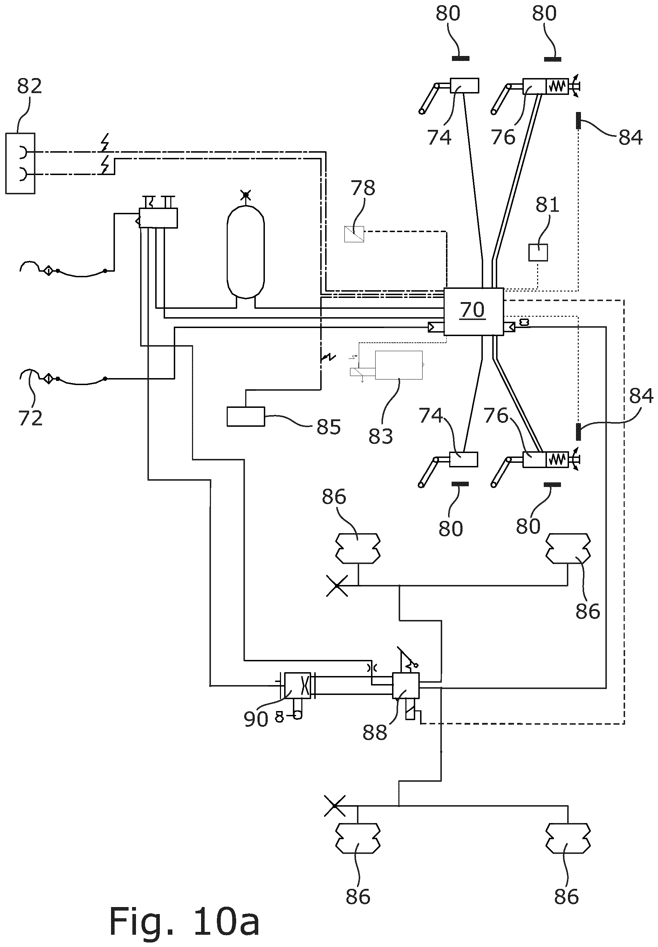

Die Figur 10a zeigt ein schematisches Schaubild unterschiedlicher Signal- und Druckleitungen eines Anhängers.

Ein zentrales Element ist ein Modulator 70, der aufgrund eines durch eine Bremse 72 vorgegebenen Bremsbefehls Bremszylinder, insbesondere Membranzylinder 74 und Membranzylinder 76 mit zugeordnetem Federspeicher, ansteuert. Die Bremskraft wird dabei durch den Modulator 70 in Anhängigkeit von einer festgestellten Beladung des Anhängers eingestellt. Dafür kann ein Beladungssensor 78 vorgesehen sein, der mit dem Modulator 70 signaltechnisch verbunden ist.

Der Anhänger kann weiterhin Reifendrucksensoren 80 aufweisen, deren Signale über den Modulator 70 und insbesondere eine darin angeordnete Empfängerplatine, über eine Schnittstelle 82 an ein Zugfahrzeug gegeben werden können. Der Modulator 70 kann die Signale der Reifendrucksensoren 80 direkt empfangen oder über einen externen RF-Empfänger 81. Die Signale können alternativ über eine Schnittstelle 85 ausgelesen werden.

Ein Wege-Ventil, insbesondere eine 2/3-Wege-Ventil kann verwendet werden, um beim Absenken die Bremszylinder geeignet anzusteuern, sodass keine Verspannungen am Achsaggregat auftreten.

Weiterhin kann ein ABS-Sensor 84 vorgesehen sein, dessen Signale beim Ansteuern der Bremszylinder berücksichtigt werden können.

Den Rädern sind jeweils Luftbalge 86 zugeordnet, die über ein Hebelsenkventil 88 und vorgeschaltetes Luftfederventil 90 angesteuert werden können.

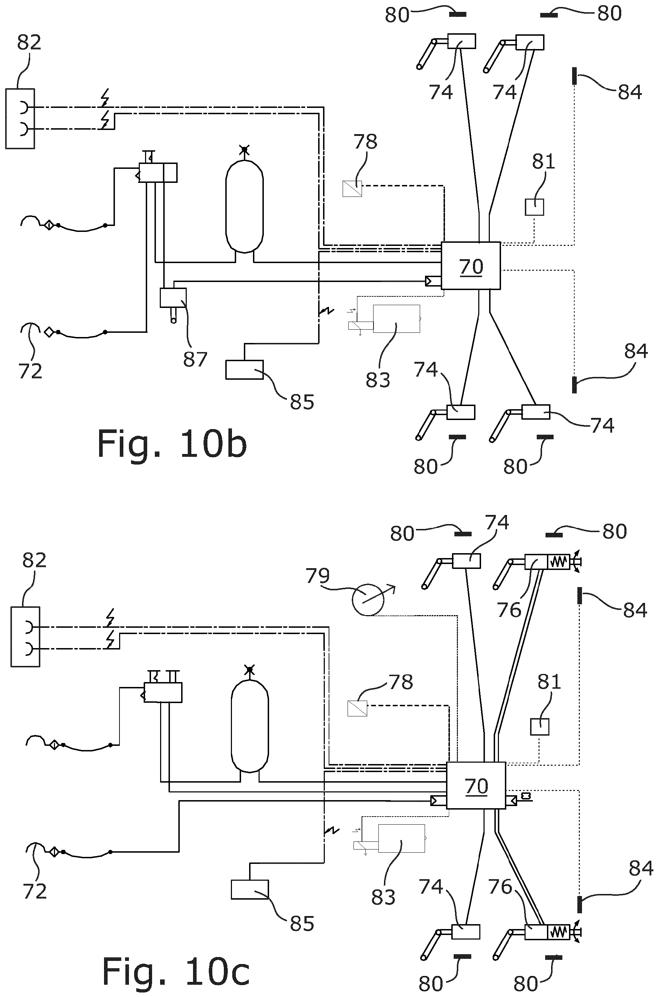

Figur 10b zeigt ein schematisches Schaubild unterschiedlicher Signal- und Druckleitungen eines Anhängers ohne Luftbalge. Komponenten, die denen der Figur 10a entsprechen, tragen dieselben Bezugsziffern.

Hier ist ein lastabhängiger Bremskraftregler 87 mit integriertem lastabhängigem Bremsventil vorgesehen. Das Bremsventil kann ebenfalls als Beladungssensor aufgefasst werden.

Figur 10c zeigt ein schematisches Schaubild unterschiedlicher Signal- und Druckleitungen eines Anhängers ohne Luftbalge. Komponenten, die denen der Figur 10a entsprechen, tragen dieselben Bezugsziffern.

Hier ist ein Wegesensor als zusätzlicher bzw. alternativer Beladungssensor 79 dargestellt.

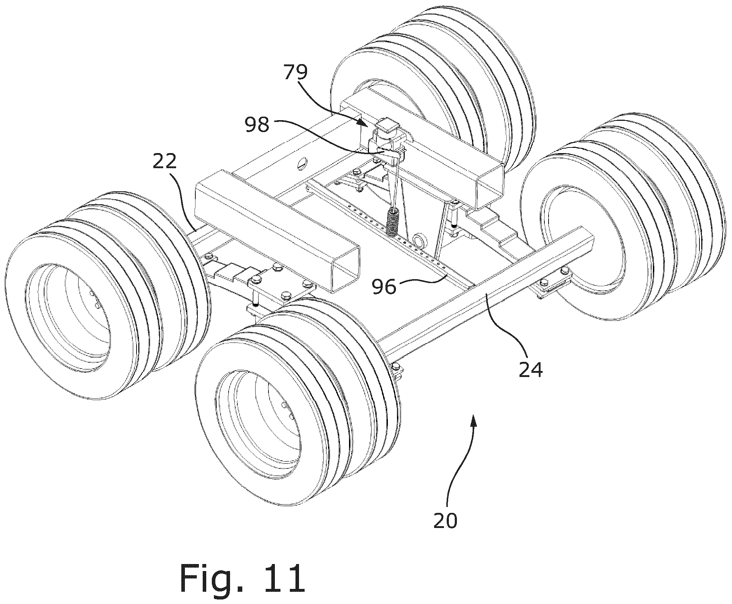

Die Figur 11 zeigt beispielhaft das Fahrgestell 20. Ein Balken 96 ist mit den Radachsen 22, 24 gekoppelt. Weiterhin ist der Balken 96 mit einem Beladungssensor 79 verbunden, über den erfasst werden kann, wie stark der Anhänger beladen ist. Bei stärkerer Beladung kann sich der Arm 98, der mit dem Balken 96 gekoppelt ist, nach oben bewegen. Diese Bewegung kann durch den Beladungssensor 79 detektiert werden. Somit kann in Abhängigkeit der detektierten Beladung des Anhängers die Bremskraft geeignet eingestellt werden.

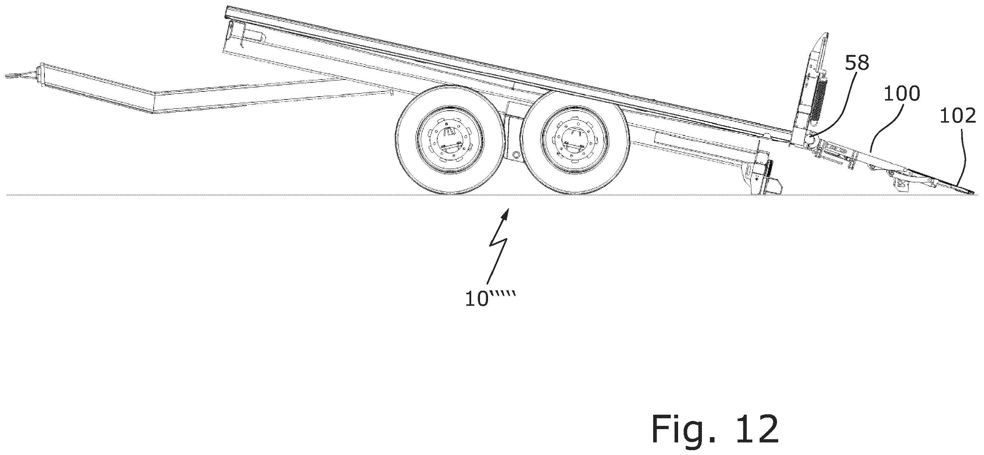

Die Figur 12 zeigt einen Anhänger 10ʺ‴, der eine Rampe 100 mit Verlängerungsabschnitt 102 aufweist. Die Rampe 100 ist um eine erste horizontale Schwenkachse 58 verschwenkt.

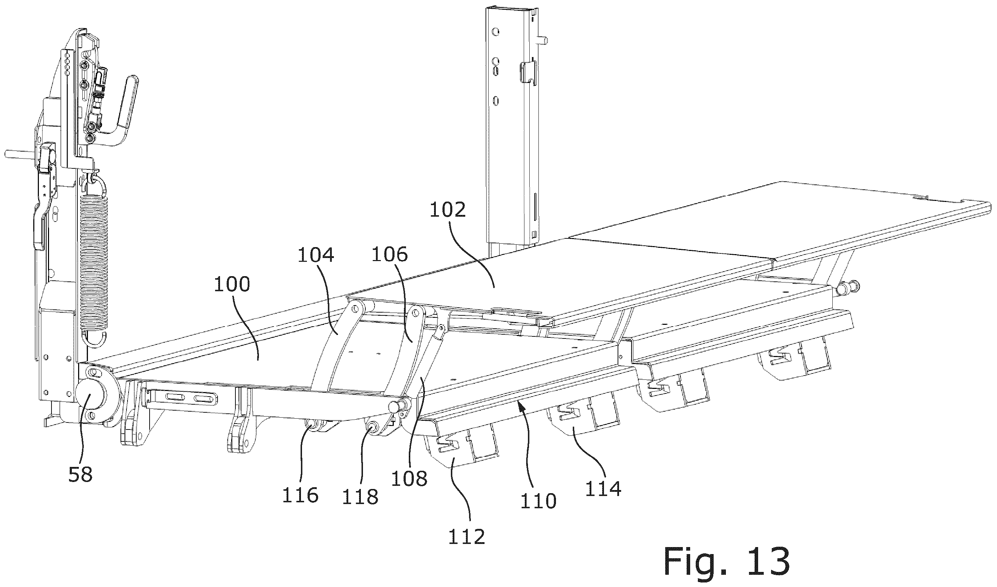

Die Figur 13 zeigt eine Detaildarstellung der Rampe 100 mit Verlängerungsabschnitt 102. Hier ist zu erkennen, dass der Verlängerungsabschnitt 102 über Arme 104, 106 mit der Rampe 100 verbunden ist. Dabei sind die Arme 104, 106 einenends schwenkbar mit der Rampe 100 und anderenends schwenkbar mit dem Verlängerungsabschnitt 102 verbunden. Die Arme 104, 106 stellen mit der Rampe 100 und dem Verlängerungsabschnitt 102 ein Parallelogramm dar. Weiterhin ist ein Federelement 108 vorgesehen, welches die Relativbewegung des Verlängerungsabschnitts 102 zur Rampe 100 unterstützen kann. Der Verlängerungsabschnitt 102 ist parallel zur Rampe 100 verlagerbar. Die Rampe 100 weist am Ende eine Stufe 110 auf, auf der der Verlängerungsabschnitt 102 zu liegen kommt, wenn der Verlängerungsabschnitt 102 vollständig ausgefahren ist. Somit ist die Oberfläche des Verlängerungsabschnitts 102 bündig zur Oberfläche der Rampe 100.

An der Rampe 100 sind Bodenaufstandselemente 112, 114 vorgesehen, die verhindern, dass die Schwenkachsen 116, 118 bei abgesenkter Rampe 100 in Berührung mit dem Boden kommen.

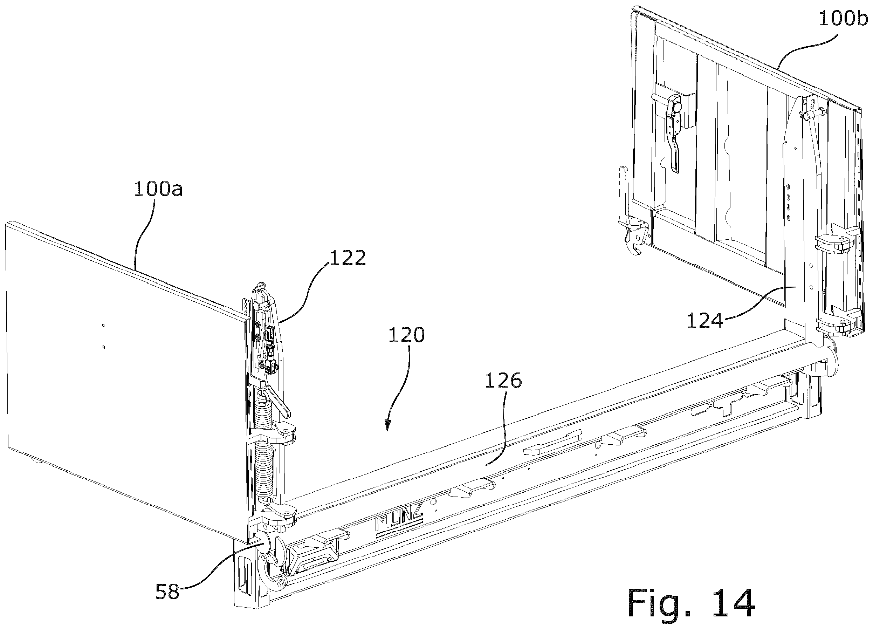

Ausweislich der Figur 14 ist zu erkennen, dass die Rampe 100 zweigeteilt ist und die Rampenabschnitte 100a, 100b um vertikale Schwenkachsen nach Art von Türen verschwenkbar sind. Die Rampenabschnitte 100a, 100b sind an einem Rahmen 120 angeordnet, der vertikale Abschnitte 122, 124 und einen horizontalen Rahmenabschnitt 126 aufweist. Der horizontale Rahmenabschnitt 126 stellt außerdem die erste horizontale Schwenkachse 58 dar.

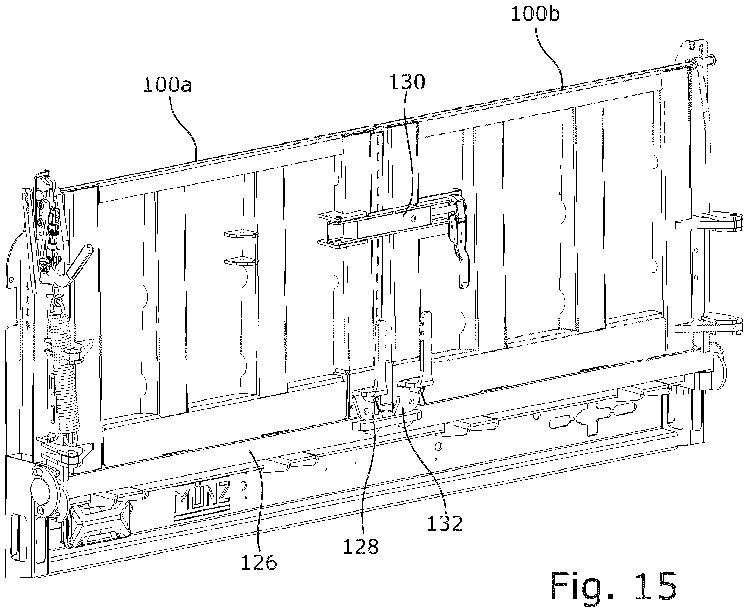

Der Figur 15 kann man entnehmen, dass die Rampenabschnitte 100a, 100b sowohl mit dem horizontalen Rahmenabschnitt 126 als auch miteinander über entsprechende Riegel 128, 130, 132 miteinander verriegelbar sind.

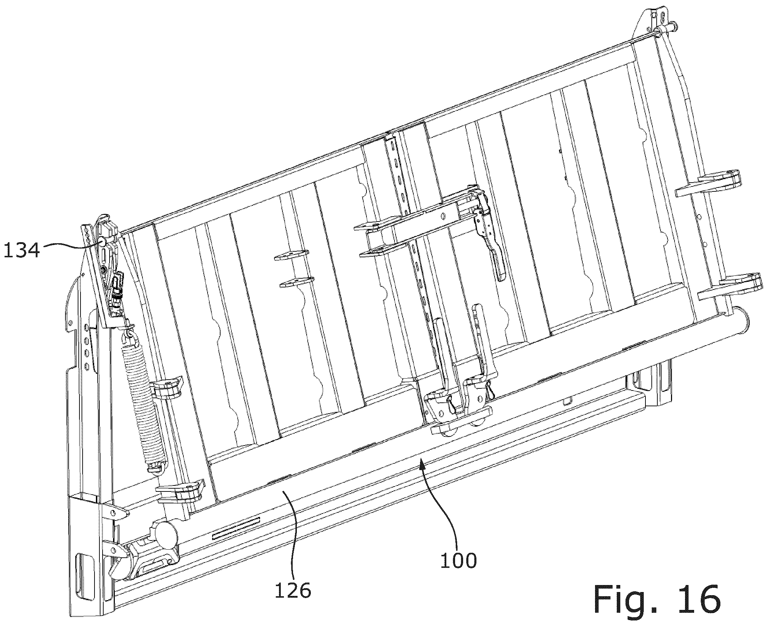

Ausweislich der Figur 16 kann man erkennen, dass die Rampe 100 und eine zweite horizontale Schwenkachse 134 pendelbar ist. Insbesondere kann der horizontale Rahmenabschnitt 126 entriegelt werden, sodass die Rampe 100 um die zweite horizontale Schwenkachse 134 pendeln kann.

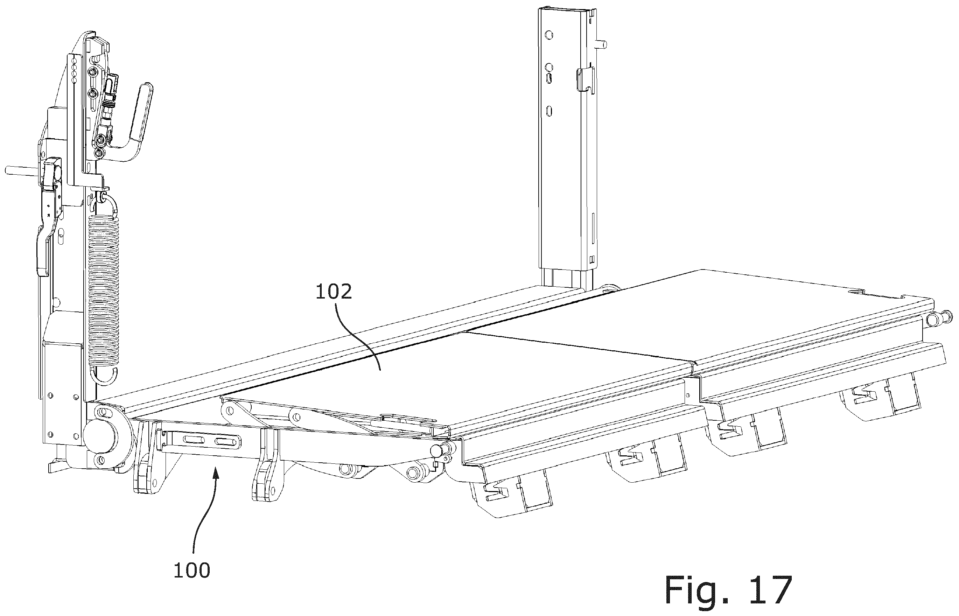

Die Figur 17 zeigt die Rampe 100 mit vollständig eingefahrenem Verlängerungsabschnitt 102. Hier ist zu erkennen, dass der Verlängerungsabschnitt 102 auf der Rampe 100 auf der der Außenseite abgewandten Seite aufliegt.

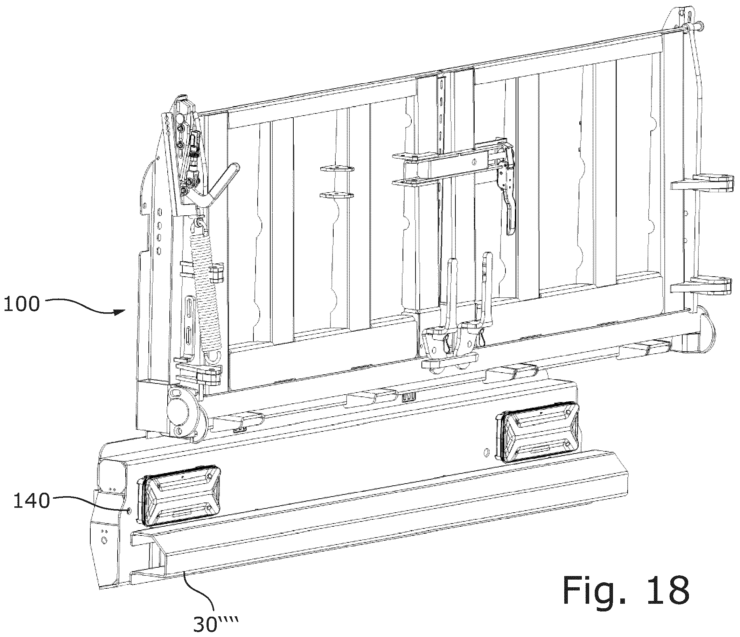

Die Figur 18 zeigt, dass unterhalb der Rampe 100 ein Beleuchtungsträger 140 angeordnet sein kann. An dem Beleuchtungsträger 140 kann ein Unterfahrschutz 30ʺʺ angeordnet sein. Hier ist der Unterfahrschutz 30ʺʺ als gekantetes Blechprofil ausgebildet. Beleuchtungsträger 140 und daran angeordneter Unterfahrschutz 30ʺʺ können insbesondere an einem ersten Rahmen 12 angeordnet sein.

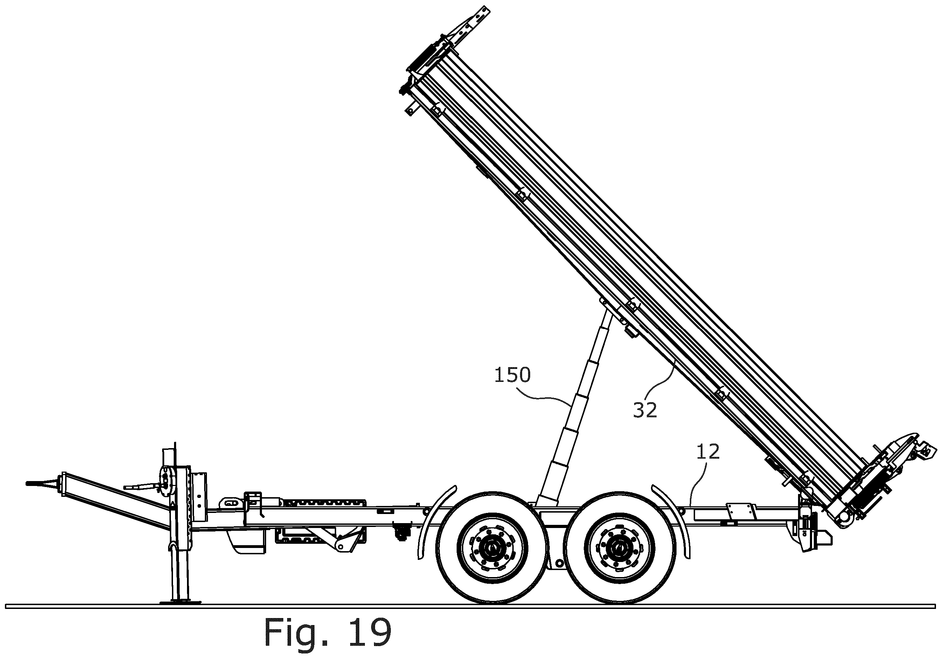

Die Figur 19 zeigt, dass eine Pritsche 32 um eine heckseitige Schwenkachse für eine Kippstellung relativ zum ersten Rahmen 12 verschwenkt werden kann. Die erfolgt über einen einfach oder doppelt wirkenden Zylinder 150.

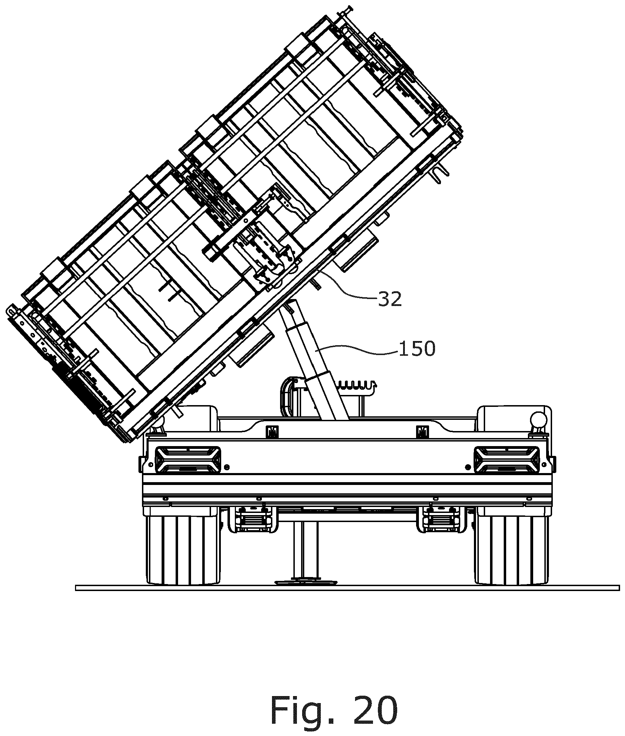

Die Figur 20 zeigt in einer Ansicht von hinten, dass alternativ die Pritsche 32 um eine Achse parallel zur Längsrichtung seitlich verkippt werden kann.

## Patentansprüche

1. Anhänger (10, 10a 10', 10", 10‴, 10ʺʺ, 10‴ʺ) mit einem ersten Rahmen (12), der um eine im Bereich einer Radachse (22, 24) angeordnete Absenkachse (14) schwenkbar ist, sodass der Anhänger (10, 10a 10', 10", 10‴, 10ʺʺ, 10‴ʺ) heckseitig absenkbar ist, wobei eine heckseitige, insbesondere sich über die gesamte Breite des Anhängers (10, 10a 10', 10", 10‴, 10ʺʺ, 10‴ʺ) erstreckende Rampe (60, 100), die um eine erste horizontale Schwenkachse (58) schwenkbar ist, vorgesehen ist, **dadurch gekennzeichnet, dass** ein Beladungssensor (78, 79) und/oder zumindest ein Reifendrucksensor (80) vorgesehen sind.

2. Anhänger nach Anspruch 1, **dadurch gekennzeichnet, dass** die Rampe (60, 100) einen Verlängerungsabschnitt (102) aufweist, der über zwei parallele Arme (104, 106) mit der Rampe (60, 100) verbunden ist, wobei die Arme (104, 106) jeweils schwenkbar mit der Rampe (60, 100) und dem Verlängerungsabschnitt (102) verbunden sind.

3. Anhänger nach Anspruch 2, **dadurch gekennzeichnet, dass** die Drehpunkte der Arme (104, 106) an der Rampenunterseite angeordnet sind.

4. Anhänger nach einem der vorhergehenden Ansprüche 2 oder 3, **dadurch gekennzeichnet, dass** ein die Relativbewegung von Rampe (60, 100) und Verlängerungsabschnitt (102) unterstützendes Federelement (108), insbesondere ein Gasfederelement, vorgesehen ist.

5. Anhänger nach einem der vorhergehenden Ansprüche, **dadurch gekennzeichnet, dass** die Rampe (60, 100) einen Rahmen (120) aufweist, der um die erste Schwenkachse (58) schwenkbar ist.

6. Anhänger nach einem der vorhergehenden Ansprüche, **dadurch gekennzeichnet, dass** der Rahmen (120) einen horizontalen und zwei dazu senkrechte Rahmenabschnitte (122, 124, 126) aufweist.

7. Anhänger nach einem der vorhergehenden Ansprüche, **dadurch gekennzeichnet, dass** der horizontale Rahmenabschnitt (126) die erste horizontale Schwenkachse (58) darstellt.

8. Anhänger nach einem der vorhergehenden Ansprüche, **dadurch gekennzeichnet, dass** zumindest ein Rampenabschnitt (100a, 100b) um eine zur horizontalen Schwenkachse (58) senkrechte Schwenkachse schwenkbar ist.

9. Anhänger nach einem der vorhergehenden Ansprüche, **dadurch gekennzeichnet, dass** zwei um eine zur horizontalen Schwenkachse (58) senkrechte Schwenkachse schwenkbare Rampenabschnitte (100a, 100b) vorgesehen sind.

10. Anhänger nach einem der vorhergehenden Ansprüche, **dadurch gekennzeichnet, dass** die Rampenabschnitte (100a, 100b) unabhängig voneinander um die erste horizontale Schwenkachse (58) schwenkbar sind.

11. Anhänger nach einem der vorhergehenden Ansprüche, **dadurch gekennzeichnet, dass** die Rampe (60, 100) um eine zweite horizontale Schwenkachse pendelbar ist.

12. Anhänger nach einem der vorhergehenden Ansprüche, **dadurch gekennzeichnet, dass** dieser eine Pritsche (32) aufweist, an der die um die erste horizontale Schwenkachse (58) schwenkbare Rampe (60, 100) befestigt ist.

13. Anhänger nach einem der vorhergehenden Ansprüche, **dadurch gekennzeichnet, dass** der Beladungssensor (78, 79) signaltechnisch mit einem Modulator (70) verbunden ist.

14. Anhänger nach Anspruch 13, **dadurch gekennzeichnet, dass** der Modulator (70) eingerichtet ist, einen Bremsdruck in Abhängigkeit des Sensorsignals des Beladungssensors (78, 79) einzustellen und einen Bremszylinder entsprechend anzusteuern.

15. Anhänger nach einem der vorhergehenden Ansprüche, **dadurch gekennzeichnet, dass** der Reifendrucksensor (80) und/oder der Beladungssensor (78, 79) signaltechnisch mit einem Zugfahrzeug, insbesondere über eine Empfängerplatine, verbindbar ist.
